# EUROPÄISCHE PATENTSCHRIFT

(11) **EP 3 794 342 B1**
(45) Veröffentlichungstag und Bekanntmachung des Hinweises auf die Patenterteilung: **16.03.2022**
(21) Anmeldenummer: 19725940.1
(22) Anmeldetag: 13.05.2019
(51) Int. Cl.: G01N 29/06, G01N 29/30, G01N 29/44

(54) **VERFAHREN ZUR JUSTIERUNG UND KALIBRIERUNG VON PRÜFEINRICHTUNGEN ZUR ULTRASCHALLPRÜFUNG VON WERKSTÜCKEN**
METHOD FOR ADJUSTING AND CALIBRATING TESTING DEVICES FOR ULTRASONIC TESTING OF WORKPIECES
PROCÉDÉ D'AJUSTEMENT ET DE CALIBRAGE DE BANCS D'ESSAI POUR LE CONTRÔLE PAR ULTRASONS DE PIÈCES

(30) Priorität: 16.05.2018 DE 102018111787
(43) Veröffentlichungstag der Anmeldung: 24.03.2021
(73) Patentinhaber: Salzgitter Mannesmann Forschung GmbH, 47259 Duisburg (DE)
(72) Erfinder: SCHMITTE, Till, 47251 Duisburg (DE); CHICHKOV, Nikolay, 47251 Duisburg (DE); NEMITZ, Oliver, 47251 Duisburg (DE)
(74) Vertreter: Moser Götze & Partner Patentanwälte mbB
(86) Internationale Anmeldenummer: PCT/EP2019/062188
(87) Internationale Veröffentlichungsnummer: WO 2019/219596

(56) Entgegenhaltungen:
- US-A1- 2005 022 602
- US-A1- 2015 377 840
- US-A1- 2018 011 064

## Beschreibung

Die Erfindung betrifft ein Verfahren zur Justierung von Prüfeinrichtungen zur Ultraschallprüfung von Werkstücken, bei dem zunächst in einen Referenzkörper mit zuvor in verschiedene zu prüfende Bereiche des Referenzkörpers eingebrachten Vergleichsreflektoren Ultraschallwellen in diese Prüfbereiche eingekoppelt und innerhalb des Referenzkörpers reflektierte Ultraschallwellen empfangen und in elektrische Signale umgewandelt werden, eine Amplitude der Signale über der Laufzeit der Signale als A-Scan ausgegeben wird, wobei in Kenntnis der Art und Lage des jeweiligen Vergleichsreflektors durch Verstellen von Prüfparametern der Prüfeinrichtung das Signal bezogen auf den zu erkennenden Vergleichsreflektor derart eingestellt wird, dass der Vergleichsreflektor als Fehler-Signal erkennbar ist, und mit diesen optimierten Einstellwerten für die Prüfparameter die Prüfeinrichtung justiert wird. Außerdem betrifft die Erfindung ein Verfahren zur Kalibrierung einer Prüfanlage, die nach diesem Justier-Verfahren justiert wurde.

Die Ultraschallprüfung von Werkstücken, wie z.B. von metallischen Rohren aus Stahl, ist seit langem bekannt und bewährt.

Die Ultraschallprüfung wird angewandt, um produktionsbegleitend eventuell vorhandene Ungänzen in Werkstücken (z.B. in einer Rohrwand oder Schweißnaht), wie z.B. Dopplungen, Risse, Kerben, Einwalzungen, Poren oder sonstige innere oder äußere Inhomogenitäten zu detektieren. Darüber hinaus wird die Ultraschallprüfung auch zur Überprüfung der Maßhaltigkeit von Rohren (z.B. der Wanddicke) angewandt.

Als Ultraschallwandler (hier auch kurz "Wandler") werden im Folgenden Systeme bezeichnet, die Ultraschallwellen in einem Objekt (z.B. dem zu prüfenden Werkstück) erzeugen und/oder detektieren können. Dabei werden Ultraschallsignale (also akustische Schwingungen) in elektrische Signale umgewandelt und umgekehrt. Man unterscheidet grundsätzlich zwischen Konfigurationen, bei denen der Sender und der Empfänger durch denselben Ultraschallwandler dargestellt werden und solchen, bei denen der Sender und der Empfänger durch zwei örtlich getrennte Ultraschallwandler realisiert werden (dies wird dann als SE-Technik bezeichnet). In vielen Fällen ist der Ultraschallwandler, der zur Erzeugung des Ultraschallpulses benutzt wird, mit dem zur Detektion verwendeten Ultraschallwandler identisch.

Bei der konventionellen Ultraschallprüfung besteht der Ultraschallwandler üblicherweise aus einem Piezokristall, der durch Anlegen einer elektrischen Spannung zum Schwingen angeregt wird beziehungsweise detektierte Schwingungen in elektrische Signale umwandelt. Andere Arten der Ultraschallwandler können Schwingungen z.B. elektromagnetisch (EMUS oder EMAT) oder laserangeregt erzeugen und/oder generieren. Auch Kombinationen von verschiedenen Techniken in Empfänger und Sender sind bekannt. Ein zur zerstörungsfreien Werkstoffprüfung eingesetzter Ultraschallwandler wird auch als Prüfkopf bezeichnet.

Eine besondere Art der Prüfköpfe (auch im Falle der SE-Technik) ist die Gruppenstrahlertechnik (auch als Phased-Array-Technik bezeichnet), bei der die dem Werkstück zugewandte akustisch aktive Fläche in eine Vielzahl von einzelnen Ultraschallwandlern unterteilt ist, die durch eine geeignete Elektronik und elektrische Verschaltung einzeln angesteuert werden können. Durch die phasenversetzte Ansteuerung einer Teilmenge der Vielzahl von Ultraschallwandlern kann nun ein Schallstrahl mit einstellbarem Einschallwinkel oder Fokuslage erzeugt werden. Durch die elektronisch gesteuerte Schallerzeugung können mit einem einzelnen Prüfkopf in Gruppenstrahlertechnik (auch als Gruppenstrahler oder Gruppenstrahlerprüfkopf bezeichnet) viele verschiedene Einschallwinkel und Fokusabstände realisiert werden ("elektronisches Scannen").

Ein Verfahren zur Prüfung von Kunststoffrohren mittels eines Phased-Array-Testinstruments ist aus der US 2018/0011064 A1 bekannt.

Bei der zerstörungsfreien Werkstoffprüfung werden z.B. nach dem Puls-Echoverfahren mit Ultraschallwandlern Ultraschallimpulse erzeugt, die über ein Koppelmedium (z.B. Wasser) in das Werkstück eingeleitet werden. Trifft der so erzeugte Ultraschallpuls auf ein Hindernis (z.B. eine Ungänze), wird dort ein Ultraschallsignal durch Reflektion oder Diffraktion erzeugt, das sich wiederum im Werkstück ausbreitet, durch das Koppelmedium läuft und anschließend von einem Ultraschallwandler detektiert wird.

Verfahren und Vorrichtungen zur zerstörungsfreien Prüfung mittels Ultraschall sind auch aus der US 2015/0377840 A1, der DE 10 2011 051 546 A1 und der DE 10 2008 037 173 A1 bekannt.

Die Amplitude des von dem Ultraschallwandler detektierten elektrischen Signals wird im Allgemeinen als Funktion der Zeit (Laufzeit des Ultraschallsignals) dargestellt. Diese Darstellung bezeichnet man als A-Scan.

Bei der automatisierten Ultraschallprüfung von Werkstücken, z.B. Rohren, werden ein oder mehrere Ultraschallwandler in definierter Art und Weise relativ zum Werkstück bewegt (z.B. bei der Rohrprüfung schraubenlinienförmig). Dabei werden an einer Vielzahl von Positionen (Orts-Koordinaten, Prüfraster) die A-Scans detektiert. Dieser Prüfvorgang wird auch als "Abscannen" bezeichnet. Die Gesamtheit der so gewonnenen A-Scans wird als Rohdaten bezeichnet, die dann zur Darstellung in verschiedener Art und Weise zusammengefasst werden können.

Um eine möglichst große Prüfabdeckung des zu untersuchenden Werkstücks zu erreichen, ist z.B. aus der DE 198 13 414 A1 der Einsatz von Gruppenstrahlerprüfköpfen bekannt. Die Prüfköpfe selbst sind im Regelfall als kombinierte Sende- und Empfangsköpfe ausgelegt, so dass Ultraschallsignale ausgesandt und die vom Werkstück reflektierten Signale von diesem und/oder einem anderen Prüfkopf des Arrays wieder empfangen werden können.

Aus der Offenlegungsschrift DE 10 2005 051 781 A1 ist ein Verfahren zur Ultraschallprüfung an Werkstücken bekannt, welches sich ebenfalls der GruppenstrahlerTechnik bedient. Hierbei werden mit den Prüfköpfen, in denen zur kontrollierten Ultraschallaussendung und -detektion eine Vielzahl einzelner Ultraschallwandler vorgesehen sind, Ultraschallwellen in einen Prüfkörper unter verschiedenen Einschallwinkeln und in verschieden vorzugebenden Fokussierbereichen angeregt und aus diesen Einschallbereichen empfangen.

Zur Durchführung einer derartigen Prüfung regt ein Steuergerät zumindest einen, meist jedoch mehrere Ultraschallwandler des Gruppenstrahlerprüfkopfs für ein begrenztes, kurzes Zeitintervall zur Einkopplung von Ultraschallwellen in den Prüfkörper an. Die dabei entstehenden, eingekoppelten Ultraschallsignale werden beispielsweise an Materialungänzen innerhalb des Prüfkörpers oder von den Außenwänden des Prüfkörpers reflektiert und gelangen als reflektierte Ultraschallwellen zu den nunmehr als Empfänger arbeitenden Ultraschallwandlern zurück, werden von diesen in elektrische Signale umgewandelt und an das Steuergerät zur Auswertung geleitet. Die Zeitspanne zwischen dem Beginn des Aussendevorganges und dem Ende des Empfangsvorganges der Ultraschallsignale wird zumeist als Messtakt bezeichnet. Die Zeit von einem Aussendevorgang zum nächsten Aussendevorgang wird Pulswiederholung, der Kehrwert Pulswiederholrate, genannt.

Die Signalauswertung geschieht üblicherweise derart, dass die einzelnen in einem Messtakt empfangenen reflektierten Ultraschallsignale unter Berücksichtigung der bei der Einschallung zu Beginn des Messtaktes verwendeten Phasenverschiebung summiert werden, woraus ein Summensignal gebildet wird.

Als Prüffunktion bezeichnet man die Prüfung eines Werkstücks auf eine bestimmte Klasse von Ungänzen. Aufgrund der räumlichen Orientierung der aufzufindenden Ungänzen wird bei einer Prüffunktion eine bestimmte räumliche Orientierung des Ultraschallstrahls relativ zum Prüfgut benötigt und der aus dieser Richtung empfangene Ultraschall wird in einem bestimmten zeitlichen Abschnitt des Messtaktes, der einem bekannten Schalllaufweg entspricht, ausgewertet.

Bei der Prüfung mindestens eines Teilbereichs eines Werkstückes durch das oben beschriebene Abscannen entsteht zu jeder Prüffunktion ein Satz von Rohdaten, der aus den A-Scans einer Prüffunktion als Funktion der Ortskoordinaten besteht.

Zur Prüfung von Werkstücken, wie zum Beispiel Rohren auf Ungänzen, die in verschiedenen räumlichen Orientierungen (z.B. Tiefen- oder Winkellage im Werkstück) vorliegen können, wird eine Vielzahl von Ultraschallprüffunktionen benötigt, die sich z.B. in Einschallwinkel, Einschallrichtung und Fokuslage unterscheiden. In dieser Situation werden Gruppenstrahlerprüfköpfe vorteilhaft eingesetzt, da dann mehrere Prüffunktionen nacheinander mit dem selben Prüfkopf abgearbeitet werden können, für die man bei einer Prüfung mit Einzelprüfköpfen jeweils mehrere Ultraschallprüfköpfe benötigen würde.

Bei der Ultraschallprüfung werden im Allgemeinen sogenannte Vergleichsreflektoren verwendet, um die reflektierten Ultraschallamplituden zu referenzieren. Bei den Vergleichsreflektoren handelt es sich meist um Nuten, Bohrungen, Flachbodenbohrungen, Einfräsungen oder Ähnliche in genau definierter Form. In der Regel benötigt man für jede Prüffunktion unterschiedliche Vergleichsreflektoren.

Als Prüfparameter bezeichnet man dann die Parameter, die einstellbar und für eine spezielle Prüffunktion festgelegt werden müssen. Die Festlegung dieser Prüfparameter geschieht zum Teil vor der Justierung oder Kalibrierung, da diese durch die Geometrie des Prüfguts, durch Normen oder Spezifikationen festliegen (z.B. Einschallwinkel). Ein anderer Teil der Prüfparameter wird bei der Justierung optimiert, so dass das Ultraschallsignal eines der Prüffunktion entsprechenden Vergleichsreflektors einen durch die Prüfvorschrift anzugebenden Amplitudenwert erreicht.

Zur Durchführung der Justierung wird ein sogenannter Referenzkörper geschaffen, der von Material und äußerer Form mit dem zu prüfenden Werkstück vergleichbar ist und welcher die entsprechenden Vergleichsreflektoren aufweist.

Konkret geschieht die Justierung von Prüfeinrichtungen zur Ultraschallprüfung von Werkstücken in der Weise, dass zunächst in verschiedene zu prüfende Bereiche des Referenzkörpers Vergleichsreflektoren eingebracht und anschließend Ultraschallwellen in diese Prüfbereiche eingekoppelt werden. Eine Unterteilung in zu prüfende Bereiche kann z.B. in Bereiche mit konstanter Werkstückgeometrie (Wanddicke, Rohrdurchmesser) erfolgen. Die innerhalb des Werkstücks von den Vergleichsreflektoren reflektierten Ultraschallwellen werden dann in elektrische Signale umgewandelt, wobei durch Verstellen von Prüfparametern (z.B. Einschallwinkel, Einschallrichtung und Fokuslage) die Signalamplitude auf eine vorgegebene Höhe gebracht wird und mit diesen optimierten Einstellwerten für die Prüfparameter die Prüfeinrichtung justiert wird.

Für die Justierung der Ultraschallprüfeinrichtung muss die Verstärkung der Amplitude des Ultraschallsignals so gewählt werden, dass die Amplitude relativ zu einer Signalgeberansprechschwelle eingestellt wird und somit zwischen zulässigen und unzulässigen Signalen unterschieden werden kann.

Gerade bei komplexen Werkstückformen, wie zum Beispiel bei Rohren mit abschnittsweise sich ändernden Querschnitten, sind aber die die Schalllaufwege beeinflussenden geometrischen Eigenschaften nicht überall identisch. Stattdessen müssen verschiedene Werkstückbereiche unterschieden werden, wie z.B. unterschiedliche Wanddicken und/oder Durchmesser, für die jeweils Vergleichsreflektoren zur Justierung eingebracht werden müssen. Beispiele für die Justierung von Ultraschallprüfanlagen finden sich in den Offenlegungsschriften EP 2 105 738 A2 und der DE 10 2012 016 607 A1 sowie in der Patentschrift DE 35 02 454 C2.

Für jeden zu prüfenden Werkstückbereich ergeben sich somit andere Einstellungen der Ultraschallprüfparameter. Bei jeder Änderung der Prüfparameter muss der entsprechende Werkstückbereich neu geprüft werden, um festzustellen, ob alle Vergleichsreflektoren nachgewiesen werden können. Insbesondere bei Prüfaufgaben, bei der eine neue, zuvor noch nicht ultraschallgeprüfte Werkstückgeometrie, für die noch keine geeigneten Prüfparameter bekannt sind, geprüft werden soll, wird die Prozedur zur Justierung dadurch zeitaufwändig, fehleranfällig und teuer. Gerade bei automatisiert arbeitenden Ultraschallprüfanlagen verursacht der Justierprozess somit teure Stillstandszeiten, in denen die Justierung durchgeführt werden muss.

Um diesem Problem abzuhelfen, sind in der Ultraschallprüftechnik Verfahren bekannt, bei der die gesamte Ultraschallprüfung oder die Prüfung an Referenzkörpern rein simulativ, das heißt unter Ausnutzung von geeigneten physikalischen Modellen und mathematischen/numerischen Rechenverfahren mit geeigneter Software auf einem Computer durchgeführt werden kann. Diese Softwarepakete liefern die optimalen Einstellparameter für eine ideale Messsituation. Allerdings sind die Berechnungsverfahren oder die zugrundeliegenden Modelle unter Umständen nicht genau genug oder es werden nicht alle zugrundeliegenden physikalischen Gesetzmäßigkeiten berücksichtigt, da dann die Berechnung zu komplex oder langwierig werden würde. Darüber hinaus werden dabei reale Gegebenheiten, Geometrieabweichungen, Toleranzen, Eigenschaften des Ultraschallwandlers, externe Störquellen etc. möglicherweise nicht oder nur unzureichend berücksichtigt.

Aufgabe der Erfindung ist es daher, zur Prüfung von Werkstücken auf Ungänzen, die in verschiedenen räumlichen Orientierungen vorliegen können, eine vereinfachte, weniger zeitaufwändige Justierung beziehungsweise Kalibrierung für Ultraschallprüfanlagen, insbesondere für automatisiert arbeitende Ultraschallprüfanlagen, anzugeben. Insbesondere soll diese Justierung für Werkstücke mit komplexer Geometrie, wie zum Beispiel die Prüfung von geometrisch komplex gestalteten Rohrenden für Rohrverbindungen, geeignet sein.

Diese Aufgabe wird durch ein Verfahren zur Justierung von Prüfeinrichtungen zur Ultraschallprüfung von Werkstücken mit den Merkmalen des Anspruches 1 gelöst. Auch wird diese Aufgabe durch ein Verfahren zur Kalibrierung einer Prüfanlage, die mit dem Justier-Verfahren justiert wurde, mit den Merkmalen des Anspruches 12 gelöst. Vorteilhafte Ausgestaltungen der Erfindung sind in den Unteransprüchen 2 bis 11, 13 und 14 angegeben.

Erfindungsgemäß wird bei einem Verfahren zur Justierung einer Prüfeinrichtung zur Ultraschallprüfung von Werkstücken, bei dem zunächst in einen Referenzkörper mit zuvor in verschiedene zu prüfende Bereiche des Referenzkörpers eingebrachten Vergleichsreflektoren Ultraschallwellen in diese Prüfbereiche eingekoppelt und innerhalb des Referenzkörpers reflektierte Ultraschallwellen empfangen und in elektrische Signale umgewandelt werden, eine Amplitude der Signale über der Laufzeit der Signale als A-Scan ausgegeben, wobei in Kenntnis der Art und Lage des jeweiligen Vergleichsreflektors durch Verstellen von Prüfparametern der Prüfeinrichtung das Signal bezogen auf den zu erkennenden Vergleichsreflektor derart eingestellt wird, dass der Vergleichsreflektor als Fehler-Signal erkennbar ist, und mit diesen optimierten Einstellwerten für die Prüfparameter die Prüfeinrichtung justiert wird, eine vereinfachte, weniger zeitaufwändige Justierung für Ultraschallprüfanlagen dadurch erreicht, dass ein Prüfraster aus zuvor festgelegten Einstellwerten in zuvor festgelegten Prüfparameterbereichen erstellt wird, die zu prüfenden Bereiche des Referenzkörpers anhand des Prüfrasters geprüft werden und die entsprechenden A-Scans als Rohdaten aufgezeichnet werden und die Optimierung der Einstellwerte für die Prüfparameter für die Justierung mit Hilfe eines Computersystems mit geeigneter Software anhand der Rohdaten durchgeführt wird.

Die erfindungsgemäß optimierten Einstellwerte bilden somit das Ergebnis der Justierung für die Ultraschallprüfeinrichtung. Der Begriff "optimierte" Einstellwerte bedeutet in diesem Zusammenhang nicht zwingend, dass es "optimale" Einstellwerte sein müssen. Im Grundsatz reicht es völlig aus, wenn man eine Kombination von Einstellwerten erhält, die die Anzeigen der Vergleichsreflektoren auf eine für eine Auswertung ausreichend hohe Signalamplitude bringen. Vorteilhafterweise wird daher durch Verstellen von Prüfparametern der Prüfeinrichtung die Amplitude der Signale auf eine vorgegebene Höhe gebracht. Die vorgegebene Höhe sind beispielsweise Dezibel-Werte im Bereich von Schwellwerten oberhalb derer Signale Fehler-Signale sind. Diese Dezibel-Werte können sich aus Normen ergeben oder Kundenvorgaben sein. Auch können diese die jeweils erreichbaren maximalen Werte sein.

Besonders vorteilhaft ist hierbei vorgesehen, dass der Referenzkörper mit einer hohen Auflösung geprüft wird. Hierdurch werden eine Vielzahl von Rohdaten erfasst, die dann später eine gute Auswertebasis für die Optimierung bilden. Eine hohe Auflösung bedeutet auch, dass bei dem Justiervorgang beziehungsweise der Justierfahrt eine hohe Prüfdichte verwendet wird. Als Prüfdichte wird hier der Abstand der jeweiligen A-Scans zueinander verstanden. Die jeweiligen A-Scans können über Ortskoordinaten (Umfang, Länge bei einer spiralförmigen Abtastung) dem Referenzkörper beziehungsweise dem zu prüfenden Werkstück zugeordnet werden. Typische Werte für die Prüfdichte bei der Prüfung des Werkstücks sind z.B. 1-2 mm Abstand der A-Scans in beide Richtungen (Umfangsrichtung, Längsrichtung). Bei der Justierung kann es sinnvoll sein, diese Prüfdichte auf z.B. 0,5 mm zu erhöhen. Dabei kann, muss aber grundsätzlich die Prüfdichte in Umfangs- und Längsrichtung nicht identisch sein. Die Prüfdichte in Umfangsrichtung ist durch die zeitliche Länge des Messtaktes bestimmt, die Dichte in Längsrichtung bei spiralförmiger Abtastung ist durch einen Transportwinkel des Werkstücks festgelegt. Bei höherer Prüfdichte sinkt also die Prüfgeschwindigkeit, wenn sonstige Bedingungen (z.B. Messtakt) gleich bleiben. Typisch ist eine Oberflächengeschwindigkeit von 0,5 bis 4 m/s. Bei 1 mm Abstand (Auflösung) liegt also ein Messtakt von 0,25 bis 2 ms vor. Falls für die Justierfahrt eine höhere Dichte, beispielsweise halber Abstand, sinnvoll ist, würde sich die Geschwindigkeit ebenfalls halbieren. Der Abstand der A-Scans liegt typischerweise zwischen 0,5 und 10 mm.

Vorteilhafterweise wird der Referenzkörper im Vergleich zu einer späteren Prüfung von Werkstücken mit einer höheren Auflösung geprüft. Hierdurch kann die Prüfgeschwindigkeit erhöht werden, aber die breite Basis für die Optimierung bleibt erhalten.

Auch ist vorteilhaft vorgesehen, dass die Optimierung der Einstellwerte manuell und iterativ durchgeführt wird und hierbei die Auswirkungen der jeweils manuell gewählten Einstellwerte auf das Prüfergebnis von dem Computersystem anhand der Rohdaten simuliert und visualisiert werden. Für jede manuell gewählte Parameter-Kombination kann dann aus den aufgenommenen, hochaufgelösten Rohdaten das Ergebnis der Prüfung simuliert und anhand des gewählten Kriteriums bewertet werden. Die Einstell- und Justierprozedur wird gewissermaßen virtuell durchgeführt. Simulation heißt hierbei, dass aus den für alle Parameterkombinationen aufgenommenen realen Ultraschalldaten diejenigen ausgewählt und verarbeitet werden, die zu den gewählten Einstellwerten, d.h. der gewählten Parameterkombination, gehören.

Für die virtuelle Justierung der Einstellwerte dienen als Datenbasis die bei der Ultraschallprüfung am Referenzkörper erhaltenen Einstellwerte für die verschiedenen Prüfbereiche am Prüfkörper. Bei der Optimierung der Einstellwerte werden diese hochaufgelöst variiert, wobei beispielsweise der Einschallwinkel oder die Fokustiefe als Parameter gewählt wird. Eine hohe Auflösung für den Winkelbereich beim Einschallen ist zum Beispiel die Verwendung des Intervalls von -45° bis 45° mit einer Schrittweite von 1°.

Welches Intervall und welche Schrittweite für das Prüfraster als sinnvoll erachtet werden, hängt dabei von der gegebenen Prüfanordnung und den gegebenen Prüfanforderungen ab. In gleicher Weise könnte eine hochaufgelöste Variation der Fokustiefe bedeuten, dass sukzessiv alle Tiefen zwischen 10 und 20 mm in 2 mm Schritten verwendet werden. Während dieses Scans werden für alle Kombinationen der verwendeten Parameter alle anfallenden Ultraschalldaten gespeichert.

Die Auswahl einer solchen Parameterkombination kann auf verschiedenen Wegen erfolgen. Sie können beispielsweise auf Erfahrungen der Prüfer beruhen oder aus Optimierungs- und/oder Simulationsalgorithmen resultieren. Solche Kombinationen können in einem weiteren Schritt vom Prüfer noch feinjustiert werden, indem einzelne Parameter leicht verändert und die Auswirkungen dieser Veränderungen auf das Prüfergebnis durch Simulation direkt visualisiert oder auf sonstigen Wegen ausgegeben werden können, so dass eine unmittelbare Beobachtung der Auswirkung auf die Höhe der Signalamplitude bei Änderungen von Einstellwerten der Prüfparameter ermöglicht wird.

In einer geeigneten Softwareumgebung kann so die komplette Einstellung der Ultraschallprüfanlage für die verschiedenen zu prüfenden Werkstückbereiche durchgeführt werden, ohne dass dabei tatsächlich die Prüfanlage oder der Referenzkörper benutzt werden.

Das Prüfraster für die Ultraschallprüfung des Referenzkörpers selbst kann ebenfalls erheblich feiner gewählt werden als bei der späteren, eigentlichen Prüfung des Werkstücks. Hierdurch ist es bei der virtuellen Justierung möglich, Prüffahrten auf verschiedenen gröberen Rastern zu simulieren.

Beispielsweise könnte es das Ziel sein, für die eigentliche Prüffahrt (Abscannen) fünf Einschallwinkel und eine feste Fokustiefe sowie ein möglichst grobes Abtastraster auszuwählen, so dass gegebene Vergleichsreflektoren mit einem möglichst hohen Signal-Rausch-Verhältnis (SRV) in möglichst kurzer Prüfzeit gefunden werden. Es soll mit anderen Worten eine Kombination aus den Parametern Einschallwinkel, Fokustiefe und Abtastraster gewählt werden, die bezüglich eines gewählten Kriteriums (z.B. hohes SRV) optimal ist.

Als weiterer wichtiger Parameter muss bei der Optimierung der Einstellwerte für die Justierung die Verstärkung des Ultraschallsignals gewählt werden, damit das von einem Vergleichsreflektor reflektierte Ultraschallsignal bezüglich seiner Amplitude relativ zu einer Signalgeberansprechschwelle eingestellt werden kann und somit zwischen zulässigen und unzulässigen Signalen unterschieden werden kann.

Der Zeitbereich, in dem der aufgezeichnete A-Scan ausgewertet wird und z.B. die Signalamplitude durch einen Vergleich mit der Signalgeberansprechschwelle auf Zulässigkeit untersucht wird (Auswertungs-Blende), ist ebenfalls von entscheidender Wichtigkeit. Bei dem hier dargestellten erfindungsgemäßen Verfahren wird bei der Aufzeichnung der Daten daher die Amplitude in einer so hohen Auflösung digitalisiert, dass die Verstärkung im Nachhinein angepasst werden kann. Auch werden die einzelnen A-Scans immer so lange aufgezeichnet, dass alle möglichen Auswertungsblenden innerhalb des Zeitbereichs der aufgezeichneten A-Scans liegen.

Das präzise hochaufgelöste Abscannen des Referenzkörpers inklusive Parametervariationen kann vorteilhaft in einer Produktionspause erfolgen. Die eigentliche Einstellung der Prüfanlage erfolgt dann, ohne den Produktionsbetrieb zu beeinflussen, im Wesentlichen virtuell, das heißt anhand der vom Referenzkörper aufgezeichneten Rohdaten in einer geeigneten Software. Demzufolge zeigen sich die besonderen Vorteile dieses erfindungsgemäßen Justierverfahrens insbesondere bei automatisiert arbeitenden Prüfanlagen und auch insbesondere bei neuen Werkstück-Geometrien, für die bisher keine geeigneten Prüfparameter bekannt waren.

Das erfindungsgemäße Justierverfahren ist besonders sinnvoll, wenn Gruppenstrahlerprüfköpfe zum Einsatz kommen, die dazu benutzt werden, den Schallstrahl z.B. unter verschiedenen Winkeln durch das zu prüfende Werkstück elektronisch zu schwenken, da dann noch eine weitere Vielzahl an Einstellparametern zu berücksichtigen sind, die den Zeitaufwand für die "normale" Einstellprozedur und Justierung weiter erhöht.

Das erfindungsgemäße Verfahren lässt sich vorteilhaft auf zwei Arten anwenden. Zum einen können bei einer manuellen Änderung von Einstellwerten die Auswirkungen auf das Ergebnis der Prüfung direkt aus den realen aufgenommenen Daten visualisiert werden. Zum anderen können Einstellwerte mit Hilfe von Optimierungsalgorithmen automatisch optimiert werden, wenn auf den Prüfergebnissen ein Optimalitätskriterium definiert ist. In einem solchen Fall lässt sich ein Prüfergebnis durch das Optimalitätskriterium quantitativ bewerten. Ein Algorithmus kann darauf basierend versuchen, einen optimalen Satz an Einstellwerten zu finden. Hier kann es möglich sein, bestimmte Einstellparameter zunächst durch Berechnungen anzunähern und dann als Startpunkt für ein Optimierungsverfahren zu verwenden.

Wie in dem obigen Beispiel dargelegt, kann ein solches Optimalitätskriterium das SRV (Signal-Rausch-Verhältnis) der von einem Vergleichsreflektor zurückgesendeten Ultraschallamplitude und/oder die Prüfzeit pro Werkstück beinhalten. Dies hängt aber wesentlich von der gegebenen Prüfanordnung und den gegebenen Anforderungen ab.

Unter Einsatz von Simulationswerkzeugen, welche die Schalllaufwege und detektierte Amplituden von vorgegebenen Vergleichsreflektoren berechnen können, kann die virtuelle Prüfanlagenjustierung weiterhin verbessert werden. Dabei wird die Einstellung durch eine Berechnung idealer Einstellparameter noch weiter vereinfacht. Diese können dann virtuell, anhand der aufgezeichneten hochaufgelösten Daten, weiter überprüft und gegebenenfalls angepasst werden.

Sobald eine virtuell optimierte Einstellung gefunden wurde, kann diese Einstellung dann am tatsächlichen Referenzkörper in der Prüfanlage überprüft werden, dies ist dann die eigentliche Justierung. Falls notwendig können dann "von Hand" noch Verbesserungen vorgenommen werden.

Die Optimierung der Einstellwerte kann dabei vorteilhaft teilautomatisiert oder vollautomatisiert erfolgen.

Die nach dem Justier-Verfahren justierte Prüfanlage wird nachfolgend für die Prüfaufgabe kalibriert, in dem nach erfolgter Justierung der Prüfanlage die optimierten Einstellwerte der Prüfparameter am tatsächlichen Referenzkörper in der Prüfanlage überprüft werden.

Hierbei findet die abschließende Prüfung des Referenzkörpers vorteilhaft mit einer im Vergleich zur Aufzeichnung der Rohdaten für die Justierung verwendeten höheren Prüfgeschwindigkeit statt, bei der dann nur noch die Einstellwerte verwendet werden, die zuvor als hinreichend zum Nachweis der Referenzfehler bestimmt wurden. Dieser Schritt entspricht dann der Kalibrierung der Prüfeinrichtung.

Das erfindungsgemäße Verfahren zur Justierung beziehungsweise Kalibrierung von Ultraschallprüfeinrichtungen besteht in einem Beispiel aus den folgenden Schritten:
- Erfassen von Rohdaten während der Prüfung des Referenzkörpers in allen Prüfbereichen, wobei die Prüfung zunächst langsamer und somit mit einer höheren Ortsauflösung als bei der späteren realen Werkstückprüfung erfolgt.
- Variieren von Prüfparametern während der Prüfung des Referenzkörpers, so dass wiederum eine Vielzahl von Rohdaten entstehen. Bei der Prüfung mit Gruppenstrahlerprüfköpfen werden viele Prüfparameter elektronisch gesteuert.
- Kombinieren sämtlicher so gewonnener Rohdaten in einem Datenverarbeitungssystem.
- Bestimmung der Einstellwerte, die zu einer ausreichenden Signalamplitude für jeden Referenzreflektor in jedem Prüfbereich führen, innerhalb dieses Datenverarbeitungssystems. Dieses sind dann die optimierten Einstellwerte. Da dieser Auswahlprozess innerhalb eines Datenverarbeitungssystems durchgeführt wird, wird das gesamte Verfahren als "virtuelle Justierung" bezeichnet.
- Abschließende Prüfung des Referenzkörpers mit hoher Prüfgeschwindigkeit, bei der dann nur noch die Prüfparameter verwendet werden, die zuvor als hinreichend zum Nachweis der Referenzfehler bestimmt wurden. Dieser Schritt entspricht dann der Kalibrierung der Prüfvorrichtung.

In einer weiteren vorteilhaften Ausgestaltung der Erfindung wird die Geometrie des zu prüfenden metallischen Werkstücks bereits während der Prüfung des Referenzkörpers mittels der gemessenen Ultraschalldaten rekonstruiert oder mittels geeigneter Geometriemessverfahren ermittelt. Das Geometriemessverfahren kann zum Beispiel ein Laserscan sein. Die so ermittelte Geometrie kann verwendet werden, um eventuelle Optimierungsmethoden noch präziser einzusetzen.

Nachfolgend ist ein Beispiel für Einstellparameter beschrieben, die bei der Einstellprozedur beziehungsweise Justierung einer Ultraschallprüfanlage im Fall der Prüfung mit Gruppenstrahlerprüfköpfen angepasst werden müssen.

Pro Prüfkopf und geometrisch gleichförmigem Bereich (Prüfbereich) auf dem zu prüfenden Werkstück müssen zum Beispiel folgende Parameter an der Ultraschallprüfanlage eingestellt und justiert beziehungsweise kalibriert werden:
- Schwenkwinkel oder Fokuseinstellung
- Blendenposition für Innen- und Außenfehler
- Blendenhöhe
- DAC-Kurve (DAC=Dynamic Amplitude Correction)
- Signalverstärkung

In diesem Fall sind dies also 6 Parameter.

Bei einer Ultraschallprüfanlage mit z.B. 6 Prüffunktionen (wie z.B. Längsfehler im Uhrzeigersinn, gegen den Uhrzeigersinn, Querfehler nach vorn und nach hinten, Wanddicke, Dopplung) und zum Beispiel 6 verschiedenen Werkstückbereichen auf dem komplex geformten Bauteil, kommt man so auf 6x6x6=216 Parameter, die manuell eingestellt werden müssten. Bei einer rein manuellen, herkömmlichen Vorgehensweise wird man es kaum schaffen, einen dieser Parameter unter ca. 1 Minute einzustellen und zu überprüfen. Somit können schnell Zeiten von mehr als 3 Stunden zusammenkommen, bei denen an der betreffenden Anlage nicht produziert werden kann.

### Ausführungsbeispiele:

1. US-Prüfung von komplex geformten Rohrenden mit Gruppenstrahlerprüfköpfen Bei einer Ultraschallprüfung mittels Gruppenstrahlerprüfköpfen von komplex geformten Enden von Rohren ist es notwendig, in verschiedenen Prüfbereichen eines entsprechend geformten Referenzkörpers Vergleichsreflektoren zu finden. Jede Zone erfordert eine Prüfung mit eigenen Ultraschallparametern, die beispielsweise die folgenden umfassen:
   - Schwenkwinkel oder Fokuseinstellung
   - Blendenposition für Innen- und Außenfehler
   - Blendenhöhe
   - DAC-Kurve
   - Signalverstärkung

In dem zuvor einmalig durchgeführten Justierungs-Scan wird der Referenzkörper mit einer sehr feinen Auflösung geprüft, wobei die oben aufgeführten Parameter in sinnvollen Grenzen an jeder Position in einem Prüfbereich variiert werden. Die hierbei anfallenden Daten (Rohdaten) werden vollständig (insbesondere die kompletten A-Scans) gespeichert. Aus diesen gespeicherten Daten lässt sich nun für ausgewählte Parameterkombinationen das Ergebnis einer Prüfung mit diesen Parametern berechnen (simulieren).

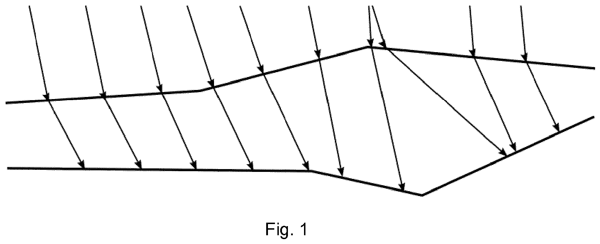

Weiterhin ist es möglich, mit geeigneten Berechnungsalgorithmen eine möglichst optimale Vorauswahl an Parametern zu wählen. Hierfür kann zum Beispiel entsprechend Figur 1 ein Raytracing-Verfahren verwendet werden, welches bei bekannter Geometrie Schall-Laufwege und zugehörige Amplitudenschwächungen berechnet und für vorgegebene Vergleichsreflektoren (Test-Fehler) optimale Schwenkwinkel und Blenden-Positionen bestimmt. Dargestellt ist hier die Wand eines Rohrendes mit einer komplex gestalteten Geometrie. Mit Pfeilen eingezeichnet sind die Schalllaufwege beim Auftreffen auf die Oberfläche der Rohrwand und die Ausbreitung in der Wand.

Mit dem Begriff "Raytracing" bezeichnet man die Berechnung des Weges von ausgesendeten Strahlen beziehungsweise Ultraschallstrahlen, insbesondere nach dem Auftreffen auf Grenz- und Oberflächen, unter der Berücksichtigung von transmittierten und reflektierten Strahlen beziehungsweise Ultraschallstrahlen, die dem bekannten Snellius-Brechungsgesetz an Grenzflächen genügen. Im Fall der Ultraschallwellen werden zudem Modenkonversionen zwischen Longitudinal- und Transversalwellen berücksichtigt. Zusätzlich können unter Ausnutzung allgemein bekannter Gesetzmäßigkeiten (Fresnel-Formeln) auch die Amplitudenänderungen bei Reflektion oder Transmission angegeben werden. Diese automatisch ausgewählten Parameter können mithilfe geeigneter Visualisierungen überprüft und durch oben beschriebene Simulationen gegebenenfalls noch feinjustiert und in anschließenden Prüfungen verwendet werden.

2. Ultraschallprüfung von Rohrenden mit konventionellen Prüfköpfen Das oben beschriebene Ausführungsbeispiel 1 kann dahingehend abgewandelt werden, dass keine Gruppenstrahlerprüfköpfe, sondern konventionelle Prüfköpfe verwendet werden. Das elektronische Schwenken wird hier durch ein mechanisches Schwenken der Prüfköpfe durch geeignete Vorrichtungen ersetzt. Während der einmalig durchgeführten langsamen Prüffahrt für die Justierung können somit in jeder Prüfposition sämtliche Schwenkwinkel in einem sinnvollen Winkelbereich mechanisch durchgeführt und die zugehörigen Daten gespeichert werden. Der restliche Ablauf bleibt entsprechend der Beschreibung zu Beispiel 1 identisch.

Das erfindungsgemäße Verfahren lässt sich vorteilhaft für die produktionsbegleitende, insbesondere automatisierte Ultraschallprüfung auf Fehler an geschweißten oder nahtlosen Rohren mit komplexen Geometrien anwenden, ist aber nicht darauf beschränkt. Beispielsweise kann dieses Verfahren auch vorteilhaft zur Prüfung von Schweißverbindungen angewandt werden.

## Patentansprüche

1. Verfahren zur Justierung einer Prüfeinrichtung zur Ultraschallprüfung von Werkstücken, bei dem zunächst in einen Referenzkörper mit zuvor in verschiedene zu prüfende Bereiche des Referenzkörpers eingebrachten Vergleichsreflektoren Ultraschallwellen in diese Prüfbereiche eingekoppelt und innerhalb des Referenzkörpers reflektierte Ultraschallwellen empfangen und in elektrische Signale umgewandelt werden, eine Amplitude der Signale über der Laufzeit der Signale als A-Scan ausgegeben wird, wobei in Kenntnis der Art und Lage des jeweiligen Vergleichsreflektors durch Verstellen von Prüfparametern der Prüfeinrichtung das Signal bezogen auf den zu erkennenden Vergleichsreflektor derart eingestellt wird, dass der Vergleichsreflektor als Fehler-Signal erkennbar ist, und mit diesen optimierten Einstellwerten für die Prüfparameter die Prüfeinrichtung justiert wird, **dadurch gekennzeichnet, dass** ein Prüfraster aus zuvor festgelegten Einstellwerten in zuvor festgelegten Prüfparameterbereichen erstellt wird, die zu prüfenden Bereiche des Referenzkörpers anhand des Prüfrasters geprüft werden und die entsprechenden A-Scans als Rohdaten aufgezeichnet werden und die Optimierung der Einstellwerte für die Prüfparameter für die Justierung mit Hilfe eines Computersystems mit geeigneter Software anhand der Rohdaten durchgeführt wird.

2. Verfahren nach Anspruch 1, **dadurch gekennzeichnet, dass** durch Verstellen von Prüfparametern der Prüfeinrichtung die Amplitude der Signale auf eine vorgegebene Höhe gebracht wird.

3. Verfahren nach Anspruch 1 oder 2, **dadurch gekennzeichnet, dass** der Referenzkörper im Vergleich zu einer späteren Prüfung von Werkstücken mit einer höheren Auflösung geprüft wird.

4. Verfahren nach mindestens einem der Ansprüche 1 bis 3, **dadurch gekennzeichnet, dass** für die Ultraschallprüfung eine Vielzahl an Einzelprüfköpfen oder Prüfköpfe in Gruppenstrahlertechnik eingesetzt wird.

5. Verfahren nach mindestens einem der Ansprüche 1 bis 4, **dadurch gekennzeichnet, dass** die Optimierung der Einstellwerte manuell und iterativ durchgeführt wird und hierbei die Auswirkungen der jeweils manuell gewählten Einstellwerte auf das Prüfergebnis von dem Computersystem anhand der Rohdaten simuliert und visualisiert werden.

6. Verfahren nach mindestens einem der Ansprüche 1 bis 5, **dadurch gekennzeichnet, dass** die Optimierung der Einstellwerte teilautomatisiert oder vollautomatisiert erfolgt.

7. Verfahren nach mindestens einem der Ansprüche 5 und 6, **dadurch gekennzeichnet, dass** die Optimierung der Einstellwerte mit Hilfe von Optimierungsalgorithmen automatisch erfolgt, wobei ein Optimalitätskriterium auf den simulierten Prüfergebnissen definiert und eine Gut-/Schlecht-Bewertung daraus abgeleitet wird.

8. Verfahren nach mindestens einem der Ansprüche 1 bis 6, **dadurch gekennzeichnet, dass** die Optimierung der Einstellwerte mit Hilfe von Optimierungsmethoden zumindest zum Teil automatisiert wird, wobei die Einstellwerte zunächst berechnet werden und dann als Startpunkt für die Optimierung genutzt werden.

9. Verfahren nach mindestens einem der Ansprüche 1 bis 6, **dadurch gekennzeichnet, dass** die Optimierung der Einstellwerte mit Hilfe eines Raytracing-Verfahren durchgeführt wird, welches bei bekannter Geometrie des zu untersuchenden Werkstücks Schall-Laufwege und zugehörige Amplitudenschwächungen berechnet und für vorgegebene Vergleichsreflektoren optimale Schwenkwinkel und Blendenpositionen der Prüfköpfe bestimmt.

10. Verfahren nach mindestens einem der Ansprüche 1 bis 9, **dadurch gekennzeichnet, dass** die Geometrie des zu prüfenden Werkstücks während des Abscannens des Referenzkörpers mittels der gemessenen Ultraschalldaten rekonstruiert oder mittels geeigneter Geometriemessverfahren ermittelt wird.

11. Verfahren nach Anspruch 10, **dadurch gekennzeichnet, dass** das Geometriemessverfahren ein Laserscan ist.

12. Verfahren zur Kalibrierung einer Prüfanlage, die nach einem Verfahren nach mindestens einem der Ansprüche 1 bis 11 justiert wurde, **dadurch gekennzeichnet, dass** nach erfolgter Justierung der Prüfanlage die optimierten Einstellwerte der Prüfparameter am tatsächlichen Referenzkörper in der Prüfanlage überprüft werden.

13. Verfahren nach Anspruch 12, **dadurch gekennzeichnet, dass** die Überprüfung der optimierten Einstellwerte am tatsächlichen Referenzkörper in der Prüfanlage mit einer im Vergleich zur Aufzeichnung der Rohdaten für die Justierung verwendeten höheren Prüfgeschwindigkeit stattfindet.

14. Verwendung des Verfahrens nach mindestens einem der Ansprüche 1 bis 13 für automatisiert arbeitende Ultraschallprüfeinrichtungen.

## Claims

1. Method for adjusting a testing device for ultrasonic testing of workpieces, in which method, in a reference body having comparison reflectors previously introduced into various regions of the reference body to be tested, ultrasonic waves are firstly coupled into these test regions and ultrasonic waves reflected within the reference body are received and converted into electrical signals, an amplitude of the signals over the propagation time of the signals is output as an A-scan, wherein, with knowledge of the type and position of the relevant comparison reflector, the signal is adjusted in relation to the comparison reflector to be identified by adjusting test parameters of the testing device in such a way that the comparison reflector can be identified as an error signal, and the testing device is adjusted using these optimised adjustment values for the test parameters, **characterised in that** a test grid is created from previously specified adjustment values in previously specified test parameter ranges, the regions of the reference body to be tested are tested on the basis of the test grid, the corresponding A-scans are recorded as raw data, and the adjustment values for the test parameters for the adjustment are optimised on the basis of the raw data using a computer system comprising suitable software.

2. Method according to claim 1, **characterised in that** the amplitude of the signals is brought to a predetermined level by adjusting test parameters of the testing device.

3. Method according to either claim 1 or claim 2, **characterised in that**, by comparison with later testing of workpieces, the reference body is tested at a higher resolution.

4. Method according to at least one of claims 1 to 3, **characterised in that** a plurality of individual test heads or test heads using phased array technology are used for the ultrasonic testing.

5. Method according to at least one of claims 1 to 4, **characterised in that** the adjustment values are optimised manually and iteratively and the effects of the manually selected adjustment values on the test result are thus simulated and visualised by the computer system on the basis of the raw data.

6. Method according to at least one of claims 1 to 5, **characterised in that** the adjustment values are optimised in a partially or fully automated manner.

7. Method according to at least one of claim 5 and claim 6, **characterised in that** the adjustment values are automatically optimised by means of optimisation algorithms, an optimality criterion being defined for the simulated test results and a good/bad evaluation being derived therefrom.

8. Method according to at least one of claims 1 to 6, **characterised in that** the optimisation of the adjustment values is at least partially automated by means of optimisation methods, the adjustment values first being calculated and then being used as a starting point for the optimisation.

9. Method according to at least one of claims 1 to 6, **characterised in that** the adjustment values are optimised by means of a ray tracing method which, given a known geometry of the workpiece to be examined, calculates sound propagation paths and associated amplitude attenuations and determines optimal swivel angles and aperture positions of the test heads for predefined comparison reflectors.

10. Method according to at least one of claims 1 to 9, **characterised in that** the geometry of the workpiece to be tested is reconstructed by means of the measured ultrasonic data while the reference body is being scanned, or is determined using suitable geometric measuring methods.

11. Method according to claim 10, **characterised in that** the geometric measuring method is a laser scan.

12. Method for calibrating a test system which has been adjusted using a method according to at least one of claims 1 to 11, **characterised in that**, after the test system has been adjusted, the optimised adjustment values of the test parameters are tested on the actual reference body in the test system.

13. Method according to claim 12, **characterised in that** the optimised adjustment values are tested on the actual reference body in the test system at a higher testing speed than that used for recording the raw data for the adjustment.

14. Use of the method according to at least one of claims 1 to 13 for automated ultrasonic testing devices.

## Revendications

1. Procédé de réglage d'un dispositif de contrôle destiné à contrôler des pièces par ultrasons, procédé dans lequel des ondes ultrasonores sont d'abord injectées par couplage dans différentes zones à contrôler d'un corps de référence qui est pourvu de réflecteurs de comparaison qui ont été préalablement introduits dans ces zones de contrôle du corps de référence, et des ondes ultrasonores réfléchies à l'intérieur du corps de référence sont reçues et converties en signaux électriques, une amplitude des signaux est délivrée sous la forme de A-scan sur la durée propagation des signaux, la connaissance du type et de la position du réflecteur de comparaison respectif permettant de régler le signal par rapport au réflecteur de référence à reconnaître par ajustement de paramètres de contrôle du dispositif de contrôle de manière à ce que le réflecteur de comparaison puisse être reconnu comme un signal d'erreur, et le dispositif de contrôle étant ajusté avec ces valeurs de réglage optimisées des paramètres de contrôle, **caractérisé en ce qu'**une trame de contrôle est créée à partir de valeurs de réglage préalablement spécifiées dans des plages de paramètres de contrôle préalablement spécifiées, les zones à contrôler du corps de référence sont contrôlées à l'aide de la trame de contrôle et les A-scans correspondants sont enregistrés comme données brutes et l'optimisation des valeurs de réglage des paramètres de contrôle destinés à l'ajustement est effectuée à l'aide d'un système informatique pourvu d'un logiciel approprié sur la base des données brutes.

2. Procédé selon la revendication 1, **caractérisé en ce que** l'amplitude des signaux est amenée à un niveau spécifié par ajustement des paramètres de contrôle du dispositif de contrôle.

3. Procédé selon la revendication 1 ou 2, **caractérisé en ce que** le corps de référence est contrôlé avec une résolution plus élevée par rapport à une inspection ultérieure de pièces.

4. Procédé selon l'une au moins des revendications 1 à 3, **caractérisé en ce que**, pour effectuer le contrôle par ultrasons, un grand nombre de têtes de contrôle individuelles ou têtes de contrôle est utilisée dans une technologie à réseau d'antennes.

5. Procédé selon l'une au moins des revendications 1 à 4, **caractérisé en ce que** l'optimisation des valeurs de réglage est effectuée manuellement et de manière itérative, et les effets des valeurs de réglage sélectionnées manuellement sur le résultat du contrôle sont simulés et visualisés par le système informatique à l'aide des données brutes.

6. Procédé selon l'une au moins des revendications 1 à 5, **caractérisé en ce que** l'optimisation des valeurs de réglage est effectuée de manière partiellement ou totalement automatisée.

7. Procédé selon l'une au moins des revendications 5 et 6, **caractérisé en ce que** l'optimisation des valeurs de réglage est effectuée automatiquement à l'aide d'algorithmes d'optimisation, un critère d'optimalité étant défini sur base des résultats de contrôle simulés et une évaluation bon/mauvais étant déduite à partir de ce critère.

8. Procédé selon l'une au moins des revendications 1 à 6, **caractérisé en ce que** l'optimisation des valeurs de réglage est au moins partiellement automatisée à l'aide de méthodes d'optimisation, les valeurs de réglage étant d'abord calculées puis utilisées comme point de départ de l'optimisation.

9. Procédé selon l'une au moins des revendications 1 à 6, **caractérisé en ce que** l'optimisation des valeurs de réglage est effectuée à l'aide d'une méthode de lancer de rayons qui, pour une géométrie connue de la pièce à examiner, calcule des chemins de propagation du son et des atténuations d'amplitude associées et détermine des angles de pivotement optimaux et des positions d'ouverture optimales des tête de contrôle pour des réflecteurs de référence spécifiés.

10. Procédé selon l'une au moins des revendications 1 à 9, **caractérisé en ce que**, lors du balayage du corps de référence, la géométrie de la pièce à contrôler est reconstituée à l'aide des données d'ultrasons mesurées ou est déterminée à l'aide de procédés de mesure de géométrie adaptés.

11. Procédé selon la revendication 10, **caractérisé en ce que** le procédé de mesure de géométrie est un balayage laser.

12. Procédé d'étalonnage d'un système de contrôle qui a été ajusté à l'aide d'un procédé selon l'une au moins des revendications 1 à 11, **caractérisé en ce que**, après le réglage du système de contrôle, les valeurs de réglage optimisées des paramètres de contrôle sont vérifiées sur le corps de référence réel dans le système de contrôle.

13. Procédé selon la revendication 12, **caractérisé en ce que** le contrôle des valeurs de réglage optimisées sur le corps de référence réel dans le système de contrôle est effectuée à une vitesse de contrôle, utilisée pour l'ajustement, qui est plus élevées par rapport à l'enregistrement des données brutes.

14. Utilisation du procédé selon l'une au moins des revendications 1 à 13 pour des dispositifs de contrôle par ultrasons fonctionnant de manière automatisée.
